# EUROPEAN PATENT APPLICATION

(11) **EP 4 742 656 A1**
(43) Date of publication of application: **13.05.2026**
(21) Application number: 24836295.6
(22) Date of filing: 02.07.2024
(51) Int. Cl.: H04N 13/383, H04N 13/305, H04N 13/31, H04N 13/139, H04N 13/183, G06F 3/01, H04N 13/30

(54) **ELECTRONIC DEVICE FOR DISPLAYING THREE-DIMENSIONAL SCREEN, AND OPERATING METHOD THEREOF**

(30) Priority: 03.07.2023 KR 20230085791; 06.09.2023 KR 20230118163
(71) Applicant: Samsung Electronics Co., Ltd., Suwon-si, Gyeonggi-do 16677 (KR)
(72) Inventor: CHOI, Jaewan, Suwon-si Gyeonggi-do 16677 (KR); HAN, Hoon, Suwon-si Gyeonggi-do 16677 (KR); YANG, Changmo, Suwon-si Gyeonggi-do 16677 (KR); CHOI, Hyejee, Suwon-si Gyeonggi-do 16677 (KR)
(74) Representative: Appleyard Lees IP LLP
(86) International application number: PCT/KR2024/009305
(87) International publication number: WO 2025/009847

(57) **Abstract**

An electronic device according to one embodiment of the present disclosure may comprise: a three-dimensional display capable of displaying a three-dimensional screen; at least one sensor configured to measure at least one value related to the position of a user's eyeballs (L, R); and at least one processor. The at least one processor may be configured to: obtain the at least one value from the at least one sensor; set a three-dimensional rendering space including a screen display area of the three-dimensional display on the basis of the at least one value; obtain an input related to at least one of rotation, movement, or enlargement of an object included in the three-dimensional screen; and on the basis of a relative position of a preview corresponding to the input of the object with respect to the three-dimensional rendering space, provide feedback related to at least one of rotation, movement, or reduction of the object or the preview in response to the input.

## Description

### [Technical Field]

The disclosure relates to an electronic device including a three-dimensional (3D) display that displays a 3D screen, and a method for operating the same.

### [Background Art]

The development of technology for electronic devices has led to the widespread use of various types of electronic devices, such as mobile communication terminals, personal digital assistants (PDAs), electronic notebooks, smartphones, tablet personal computers (PCs), and wearable devices.

For example, an electronic device focuses on enabling a viewer to watch an image where a stereoscopic effect is implemented from a free position without the hassle of wearing glasses, beyond the limitations of the existing 3D stereoscopic imaging scheme which requires wearing glasses. A 3D display that displays glasses-free 3D stereoscopic images is implemented by fusing multi-viewpoint images into one, which provides different images to the left and right eyes using a viewer's eye parallax to achieve the stereoscopic effect.

Further, for example, an electronic device may provide virtual reality (VR), which allows a user to have a real-life experience in a virtual world created by a computer, augmented reality (AR), which displays virtual information (or objects) added to the real world, and mixed reality (MR), which is a blend of VR and AR. The electronic device provides the user with 3D stereoscopic images corresponding to VR, AR, or MR.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

An electronic device according to an embodiment of the disclosure may include a three-dimensional (3D) display capable of displaying a 3D screen, at least one sensor configured to measure at least one value related to positions of a user's eyes, and at least one processor. The at least one processor may be configured to obtain the at least one value from the at least one sensor. The at least one processor may be configured to set a 3D rendering space including a display area of the 3D display, based on the at least one value. The at least one processor may be configured to obtain an input related to moving an object included in the 3D rendering space displayed through the 3D display. The at least one processor may display a preview of the object O moved in the 3D rendering space through the 3D display, based on the input. The at least one processor may be configured to provide a feedback adjusting displaying of the object O in the 3D rendering space, based on a position of the object O corresponding to the input in the 3D rendering space, after the preview is displayed.

A method for operating an electronic device according to an embodiment of the disclosure may include obtaining, from at least one sensor, at least one value related to positions of a user's eyes. The method for operating the electronic device according to an embodiment may include, based on the at least one value, setting a 3D rendering space including a display area of a 3D display capable of displaying a 3D screen. The method for operating the electronic device according to an embodiment may include obtaining an input related to moving an object included in the 3D rendering space displayed through the 3D display. The method for operating the electronic device according to an embodiment of the disclosure may include, based on the input, displaying a preview of the object moved in the 3D rendering space through the 3D display. The method for operating the electronic device according to an embodiment may include, based on a position of the object corresponding to the input in the 3D rendering space, providing a feedback adjusting displaying of the object in the 3D rendering space, after the preview is displayed.

A non-transitory computer-readable storage medium storing at least one program according to an embodiment of the disclosure may include, based on execution of an application, obtaining at least one value related to positions of a user's eyes from at least one sensor. The storage medium according to an embodiment may include, based on the at least one value, setting a 3D rendering space including a display area of a 3D display capable of displaying a 3D screen. The storage medium according to an embodiment may include obtaining an input related to moving an object included in the 3D rendering space displayed through the 3D display. The storage medium according to an embodiment may include, based on the input, displaying a preview of the object moved in the 3D rendering space through the 3D display. The storage medium according to an embodiment may include, based on a position of the object corresponding to the input in the 3D rendering space, providing a feedback adjusting displaying of the object in the 3D rendering space, after the preview is displayed.

An electronic device according to an embodiment of the disclosure may include a 3D display capable of displaying a 3D screen, at least one sensor configured to measure at least one value related to positions of a user's eyes, and at least one processor. The at least one processor may be configured to obtain the at least one value from the at least one sensor. The at least one processor may be configured to, based on the at least one value, set a 3D rendering space including a display area of the 3D display. The at least one processor may be configured to obtain an input related to moving the object included in the 3D rendering space displayed through the 3D display. The at least one processor may be configured to, based on the input, display a preview of the object moved in the 3D rendering space through the 3D display. The at least one processor may be configured to identify a position of the object corresponding to the input in the 3D rendering space, after the preview is displayed. The at least one processor may be configured to, based on identifying the position of the object, display the object on the 3D display by rotating, enlarging, or reducing the object.

A method for operating an electronic device according to an embodiment of the disclosure may include obtaining, from at least one sensor, at least one value related to positions of a user's eyes. The method for operating the electronic device according to an embodiment may include, based on the at least one value, setting a 3D rendering space including a display area of a 3D display. The method for operating the electronic device according to an embodiment may include obtaining an input related to moving the object included in the 3D rendering space displayed through the 3D display. The method for operating the electronic device according to an embodiment may include, based on the input, displaying a preview of the object moved in the 3D rendering space through the 3D display. The method for operating the electronic device according to an embodiment may include identifying a position of the object corresponding to the input in the 3D rendering space, after the preview is displayed. The method for operating the electronic device according to an embodiment may include, based on identifying the position of the object, displaying the object on the 3D display by rotating, enlarging, or reducing the object.

A non-transitory computer-readable storage medium storing at least one program according to an embodiment of the disclosure may include obtaining, from at least one sensor, at least one value related to positions of a user's eyes. The storage medium according to an embodiment may include, based on the at least one value, setting a 3D rendering space including a display area of a 3D display. The storage medium according to an embodiment may include obtaining an input related to moving the object included in the 3D rendering space displayed through the 3D display. The storage medium according to an embodiment may include, based on the input, displaying a preview of the object moved in the 3D rendering space through the 3D display. The storage medium according to an embodiment may include identifying a position of the object corresponding to the input in the 3D rendering space, after the preview is displayed. The storage medium according to an embodiment may include, based on identifying the position of the object, displaying the object on the 3D display by rotating, enlarging, or reducing the object.

### [Brief Description of Drawings]

FIG. 1 is a block diagram illustrating an electronic device in a network environment according to an embodiment of the disclosure.
FIG. 2 is a block diagram illustrating an electronic device according to an embodiment of the disclosure.
FIG. 3A illustrates screens provided respectively to a user's left eye and right eye according to a left/right split scheme, according to an embodiment of the disclosure.
FIG. 3B illustrates a screen perceived by the user based on the displayed screens of FIG. 3A.
FIG. 4 illustrates objects corresponding to various depth senses, included in three-dimensional (3D) screens according to an embodiment of the disclosure.
FIG. 5A illustrates a lenticular lens-using scheme according to an embodiment of the disclosure.
FIG. 5B illustrates a parallax barrier-using scheme according to an embodiment of the disclosure.
FIG. 6 illustrates a 3D rendering space (view frustum) according to an embodiment of the disclosure.
FIG. 7A illustrates a free zone and a restriction zone within a 3D rendering space according to an embodiment of the disclosure.
FIG. 7B is a plan view of FIG. 7A.
FIG. 8A illustrates a state where an object is rotated, moved, or enlarged so as to leave a 3D rendering space according to an embodiment of the disclosure.
FIG. 8B illustrates a state where an object leaves a 3D rendering space according to the position of a user's eye, according to an embodiment of the disclosure.
FIG. 8C illustrates a state where images of an object overlap along with enlargement or movement of the object by a threshold or more according to an embodiment of the disclosure.
FIG. 9 illustrates an embodiment of adjusting a moving speed according to a movement input for an object in an electronic device according to an embodiment of the disclosure.
FIG. 10 illustrates an embodiment of moving an object in a reverse direction of a movement input for the object in an electronic device according to an embodiment of the disclosure.
FIG. 11 illustrates an embodiment of moving an object to a designated position according to a movement input for the object in an electronic device according to an embodiment of the disclosure.
FIG. 12A illustrates an embodiment of displaying a boundary plane according to movement of an object, according to an embodiment of the disclosure.
FIG. 12B illustrates an embodiment of providing a haptic feedback according to movement of an object, according to an embodiment of the disclosure.
FIG. 13 illustrates an embodiment of enlarging an object according to an enlargement input for the object in an electronic device, according to an embodiment of the disclosure.
FIG. 14 illustrates an embodiment of rotating an object according to a rotation input for the object in an electronic device, according to an embodiment of the disclosure.
FIG. 15 illustrates an embodiment of moving a rotation axis of an object according to a rotation input for the object in an electronic device, according to an embodiment of the disclosure.
FIG. 16A illustrates a user input outside a designated range according to an embodiment of the disclosure.
FIG. 16B illustrates an embodiment of applying a depth of field effect to at least a portion of an edge of an object according to an embodiment of the disclosure.
FIG. 17A illustrates a user input outside a designated range according to an embodiment of the disclosure.
FIG. 17B illustrates an embodiment of restricting movement of an object in a depth direction of a 3D display according to an embodiment of the disclosure.
FIG. 18 is a flowchart illustrating a method for operating an electronic device according to an embodiment of the disclosure.
FIG. 19 is a flowchart illustrating a method for operating an electronic device according to an embodiment of the disclosure.
FIG. 20 a flowchart illustrating a method for operating an electronic device according to an embodiment of the disclosure.

### [Mode for Carrying out the Invention]

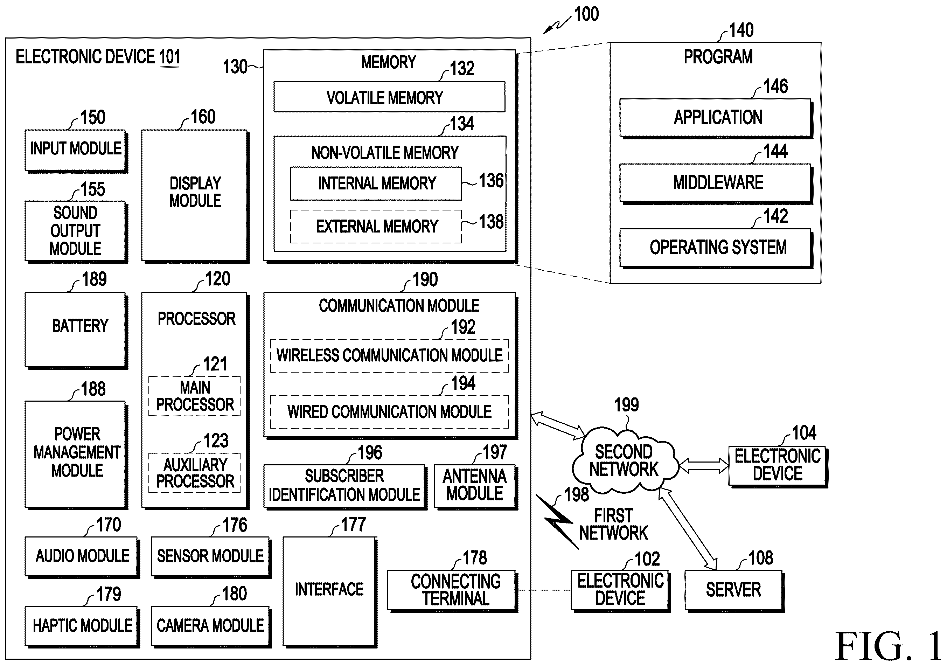

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

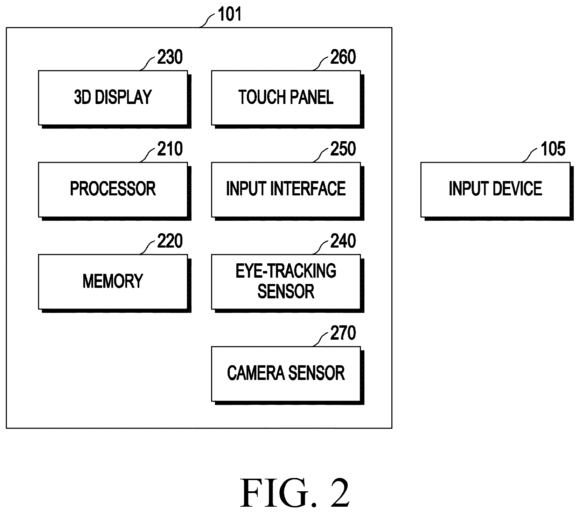

FIG. 2 is a block diagram illustrating the electronic device 101 according to an embodiment of the disclosure.

Referring to FIG. 2, the electronic device 101 according to an embodiment may include a processor 210 (e.g., the processor 120 of FIG. 1), memory 220, (e.g., the memory 120 of FIG. 1), a three-dimensional (3D) display 230, (e.g., the display module 160 of FIG. 1), an eye-tracking sensor 240, (e.g., the sensor module 176 of FIG. 1), an input interface 250, (e.g., the interface 166 of FIG. 1), a touch panel 260, and/or a camera sensor 270 (e.g., the camera module 180 of FIG. 1). The electronic device 101 according to an embodiment may further include some of the components included in the electronic device 101 of FIG. 1 or may be configured by excluding some of the components.

The processor 210 according to an embodiment may control at least one other component (e.g., hardware or software component) of the electronic device 101. In an embodiment, the processor 210 may perform various data processing or operations, and as at least part of the data processing or operations, may store instructions or data received from other components in the memory 220, process the instructions or data stored in the memory 220, and store resulting data in the memory 220.

In an embodiment, the processor 210 may include a rendering engine that renders a 3D screen to be displayed on the 3D display 230 in real time. For example, the rendering engine may be included in a GPU or a CPU.

The memory 220 according to an embodiment may store instructions which are executable in the processor 210.

The 3D display 230 according to an embodiment may display a visual screen that realizes a stereoscopic vision for a user. In an embodiment, the 3D display 230 may display a 3D screen including an object. For example, the object may be a 3D object which is at least partially displayed stereoscopically. For example, at least a portion of the object may be located forward (positive) or backward (negative) along a depth direction of the 3D display and displayed stereoscopically on the 3D display 230.

In an embodiment, the 3D display 230 may display a 3D screen by displaying different images to the user's left and right eyes according to a left/right split scheme, as described later.

The eye-tracking sensor 240 according to an embodiment may measure at least one value related to the positions of the user's eyes. In an embodiment, the eye-tracking sensor 240 may use an RGB sensor or a depth sensor.

In an embodiment, the eye-tracking sensor 240 may be an image sensor that directly senses the position of the user's eye (e.g., left and right eyes). In an embodiment, the eye-tracking sensor 240 may be a position sensor that detects the position of the user's face, and the processor 210 may estimate the position of the user's eye based on the detected position of the user's face.

The input interface 250 according to an embodiment may receive a user input corresponding to a 3D screen displayed on the 3D display 230. In an embodiment, the input interface 250 may receive an indirect operation input via an input device 105 connected to the electronic device 101 or a direct operation input of the user obtained through a sensor (e.g., the touch panel 260 or the camera sensor 270). In an embodiment, the input interface 250 may support a designated protocol for connection to the external input device 105.

The touch panel 260 according to an embodiment may be integrally coupled to the 3D display 230 and sense a touch input of the user corresponding to a 3D screen displayed on the 3D display 230. In an embodiment, the electronic device 101 may display a controller (e.g., a slider or coordinates) in at least a partial area of the 3D display 230 and sense a touch input of the user corresponding to the displayed controller. For example, the touch panel 260 may sense a touch based on principles such as a capacitive scheme, an electromagnetic scheme, a pressure method, or an IR scheme, to which the disclosure is not limited.

In an embodiment, in addition to a physical contact touch of the user, the touch panel 260 may sense a proximity touch that approaches or is in close proximity to the touch panel without mechanical contact. For example, the touch panel 260 may sense a proximity touch based on principles such as a transmissive photoelectric sensor, a direct reflective photoelectric sensor, a mirror reflective photoelectric sensor, a high-frequency oscillation-type proximity sensor, a capacitive proximity sensor, a magnetic proximity sensor, or an IR proximity sensor, to which the disclosure is not limited.

In an embodiment, when the touch panel 260 uses the capacitive scheme, it may detect a proximity touch of a pointer based on a change in an electric field caused by the proximity of the pointer, as well as a contact touch of the user.

The camera sensor 270 according to an embodiment may sense a user gesture occurring in front of the 3D display 230. In an embodiment, a gesture by the user's hand may occur in front of the 3D display 230 to correspond to a 3D screen on the 3D display 230, and the camera sensor 270 may sense the position and type of the user gesture.

The input device 105 according to an embodiment may be connected to the electronic device 101 wiredly or wirelessly. For example, the input device 105 may be a stylus pen or controller that transmits an operation input according to a slider or coordinates. For example, the input device 105 may obtain an input such as a movement, a touch, a button click, or hovering, and provide a signal corresponding to the obtained input to the electronic device 101 (e.g., the input interface 250).

The electronic device 101 according to an embodiment may move, enlarge, or change a 3D screen (or object) displayed on the 3D display 230 based on a user input obtained from the input interface 250 connected to the touch panel 260 or the camera sensor 270, or from the external input device 101.

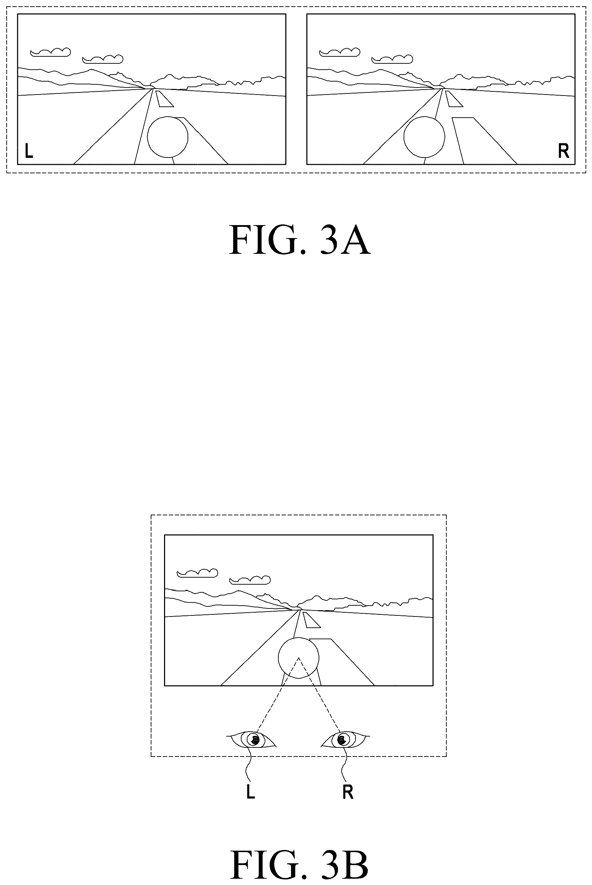

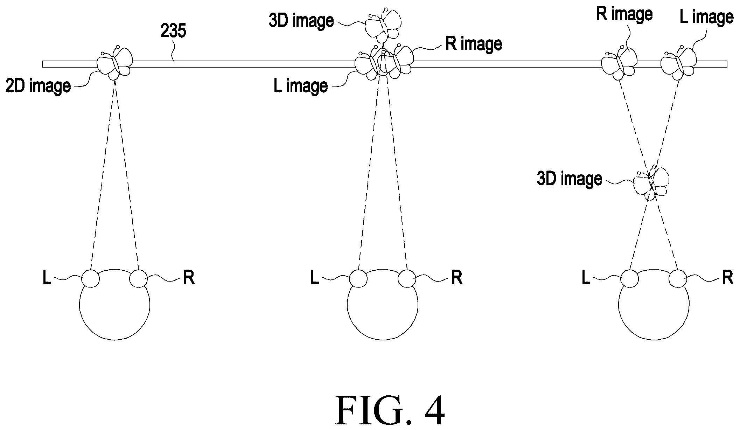

FIG. 3A illustrates screens provided respectively to the user's left eye L and right eye R according to a left/right split scheme, according to an embodiment of the disclosure. FIG. 3B illustrates a screen perceived by the user according to the displayed screens of FIG. 3A. FIG. 4 illustrates objects (a 2D image and a 3D image) corresponding to various sense of depth, included in a 3D screen according to an embodiment of the disclosure.

Referring to FIGS. 3A, 3B, and 4, the electronic device 101 according to an embodiment may provide a 3D screen through the 3D display (e.g., the 3D display 230 of FIG. 2) according to a left/right split scheme using binocular parallax. In an embodiment, the electronic device 101 may use a left/right split scheme that displays differently an image (L image) provided to the user's left eye L and an image (R image) provided to the user's right eye R, so that the user perceives a 3D screen. The human brain may observe a 3D image by synthesizing an image (L image) viewed through the left eye L and an image (R image) viewed through the right eye R.

In an embodiment, the electronic device 101 may control a user-felt sense of depth of an object (a 2D image or a 3D image) included in a 3D screen by adjusting a relative position and distance between an image (L image) corresponding to the left eye L and an image (R image) corresponding to the right eye R.

In an embodiment, the electronic device 101 may display the image (L image) corresponding to the left eye L and the image (R image) corresponding to the right eye R identically, thereby displaying the 3D screen, so that the user perceives the 2D object (2D image) as having a sense of depth corresponding to a display area 235 of the 3D display 230.

In an embodiment, the electronic device 101 may display a 3D screen by moving an image (L image) corresponding to the left eye L to the left and moving an image (R image) corresponding to the right eye R to the right, so that the user perceives a 3D object (3D image) as having a sense of depth of being located backward in the display area 235 of the 3D display 230.

In an embodiment, the electronic device 101 may display a 3D screen by moving an image (L image) corresponding to the left eye L to the right and moving an image (R image) corresponding to the right eye R to the left, so that the user perceives a 3D object (3D image) as having a sense of depth of being located forward in the display area 235 of the 3D display 230.

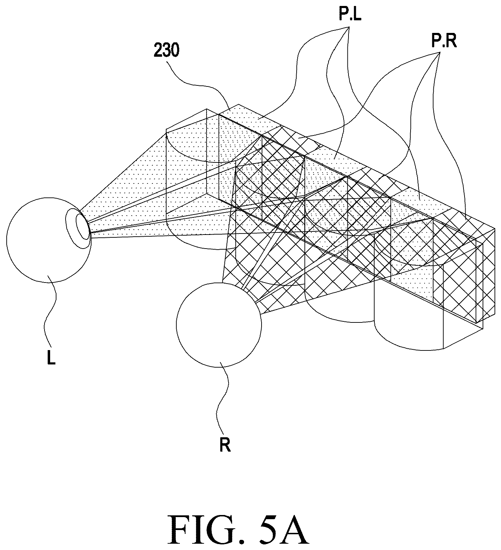

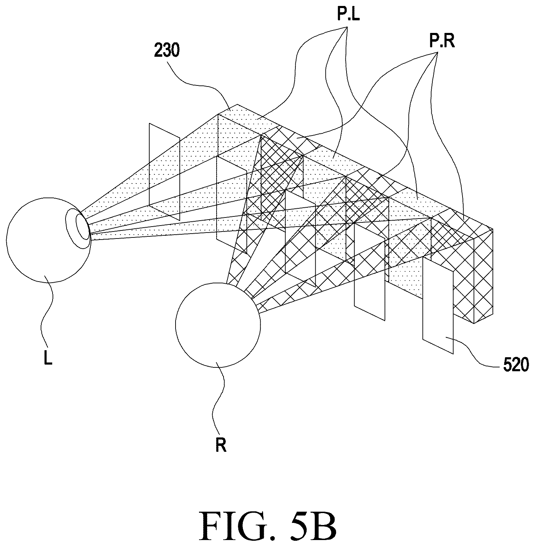

FIG. 5A illustrates a method using a lenticular lens 510 according to an embodiment of the disclosure. FIG. 5B illustrates a method using a parallax barrier 520 according to an embodiment of the disclosure.

Referring to FIGS. 5A and 5B, the electronic device 101 may generate binocular parallax between the user's left eye L and right eye R to provide a 3D screen according to a left/right split scheme.

Binocular parallax (stereo disparity) refers to the difference in the perspective with which a person's left eye L and right eye R view an object. When the human brain synthesizes an image viewed through the left eye L and an image viewed through the right eye R, the synthesized image gives the person a sense of depth. 3D image display methods based on binocular parallax may be categorized into a glasses type that requires special glasses and a glasses-free type that does not require glasses.

The glasses type includes, for example, a method using color glasses with wavelength selectivity, a polarization glasses method using a light-blocking effect due to a polarization difference, and a time-division glasses method that alternately presents left and right images within the persistence of vision of the eye. In addition, there is a method of obtaining a sense of depth for movement in the left/right direction based on a time difference in the visual system resulting from a difference in transmittance by attaching filters with different transmittances to the left and right eyes L and R, respectively.

The glasses-free type, which is a method of generating a sense of depth on an image display surface side, rather than an observer side, includes, for example, a parallax barrier scheme, a lenticular lens scheme, or a microlens array scheme.

In an embodiment, the lenticular lens 510 may be disposed in front of the 3D display 230, as illustrated in FIG. 5A. For example, the lenticular lens 510 may be formed of film or glass and attached in front of the 3D display 230. For example, pixels P.L. to be input to the left eye and pixels P.R. to be input to the right eye may be alternately arranged along a horizontal direction on the 3D display 230, and the lenticular lens 510 may provide optical discriminative directivity for the pixels P.L. to be input to the left eye and the pixels P.R. to be input to the right eye. In an embodiment, the 3D display 230 may separately provide different screens to the user's left eye L and right eye R by the lenticular lens 510 located in front of it.

In an embodiment, the parallax barrier 520 may be disposed in front of the 3D display 230, as illustrated in FIG. 5B. For example, the parallax barrier 520 may be attached in front of the 3D display 230, and the electronic device 101 may control the movement of the parallax barrier 520. For example, the pixels P.L. to be input to the left eye and the pixels P.R. to be input to the right eye may be alternately arranged along the horizontal direction on the 3D display 230, and screens may be separately provided to the left eye L and the right eye R through an aperture in a vertical grid pattern. In an embodiment, the 3D display 230 may separately provide different screens to the user's left eye L and right eye R by the parallax barrier 520 located in front of it.

Further, in an embodiment, the electronic device 101 may be formed in a glasses form and provided with separate displays (not shown) corresponding to the user's left eye and right eye, to induce binocular parallax. In an embodiment, the electronic device 101 may provide a 3D screen to the user by displaying different images or videos to the user's left eye and right eye.

In an embodiment, the electronic device 101 may display a 3D screen through the display area of the display (not shown) that displays screens corresponding to the user's two eyes, respectively, and move an object included in the 3D screen in the depth direction of the display (not shown).

The electronic device 101 according to an embodiment may implement virtual reality (VR) through the display area of the display (not shown). In an embodiment, the electronic device 101 may display a virtual object on the display area of the display (not shown).

The electronic device 101 according to an embodiment may implement augmented reality (AR) through the display area of the display (not shown). In an embodiment, the electronic device 101 may expose an external environment to the user through the display area of a transparent or translucent display (not shown). In an embodiment, the electronic device 101 may display a virtual object on the display area of the transparent or translucent display (not shown) such that it overlaps the external environment.

In an embodiment, the electronic device 101 may use the input interface (e.g., the input interface 250 of FIG. 2) which obtains a user input by sensing the movement of the user's hand through the camera sensor (e.g., the camera sensor 270 of FIG. 2) or by using the movement of a cursor through the input device (e.g., the input device 105 of FIG. 2).

In an embodiment, in response to a user input to a virtual object, the electronic device 101 may output a designated response based on a property of the object or a property of the user input.

In an embodiment, when the electronic device 101 is not capable of outputting the designated response based on the property of the object or the property of the user input in response to the user input to the virtual object, it may move the virtual object in the depth direction of the display (not shown).

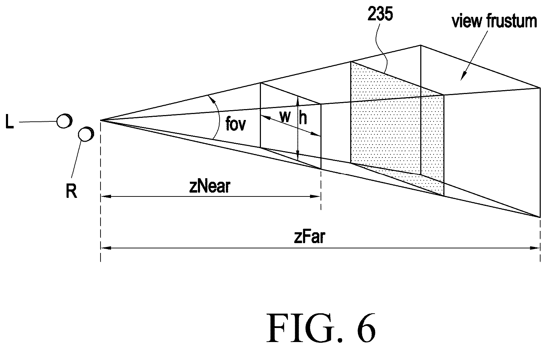

FIG. 6 illustrates a 3D rendering space (view frustum) according to an embodiment of the disclosure.

Referring to FIG. 6, the 3D rendering space according to an embodiment may be a space defined by a camera (not shown) disposed for 3D rendering or the user's eyes L and R. In an embodiment, the electronic device 101 may render an object (not shown) located inside the 3D rendering space and display it on the 3D display (e.g., the 3D display 230 of FIG. 2). In an embodiment, the electronic device 101 may not render an object O that has left the 3D rendering space.

In an embodiment, when the position, angle, or size of the object O included in a 3D screen displayed on the 3D display changes and leaves the 3D rendering space, the 3D screen and/or the object may be clipped.

In an embodiment, the electronic device 101 may set a pyramid-shaped 3D rendering space clipped by two clipping planes. In an embodiment, the electronic device 101 may set a 3D rendering space based on the positions of the eyes L and R (or the position of a camera), a field of view (FOV), an aspect ratio w/h, and/or two clipping planes zNear and zFar.

In an embodiment, the display area 235 of the 3D display 230 may be included in the 3D rendering space. In an embodiment, the electronic device 101 may set the 3D rendering space to extend forward and backward of the display area 235 of the 3D display 230.

For example, the two clipping planes zNear and zFar of the 3D rendering space may include a first clipping plane zNear located in front of the display area 235 of the 3D display 230 and a second clipping plane zFar located behind the display area 235 of the 3D display 230. For example, the aspect ratio w/h of the 3D rendering space may match the aspect ratio w/h of the display area 235 of the 3D display 230. In an embodiment, the electronic device 101 may set the 3D rendering space based on the position of the user or the positions x, y, and z of the eyes L and R relative to the display area 235 of the 3D display 230.

In an embodiment, the electronic device 101 may obtain at least one value related to the positions of the user's eyes L and R from at least one sensor (e.g., the eye-tracking sensor 240 of FIG. 2) set to measure at least one value related to the positions of the user's eyes L and R. In an embodiment, the electronic device 101 may newly obtain at least one value related to the positions of the user's eyes L and R or newly set a 3D rendering space, based on satisfaction of a designated update condition. For example, the electronic device 101 may obtain at least one value related to the positions of the user's eyes L and R from at least one sensor according to a designated periodicity. For example, the electronic device 101 may be configured to update the position of the user or the positions of the user's eyes L and R, as the obtained at least one value related to the positions of the user's eyes L and R changes.

In an embodiment, the electronic device 101 may identify the position of the user or the positions of the user's eyes L and R based on the at least one value obtained from the at least one sensor 240, and set the 3D rendering space based on the identified position of the user or the identified positions of the user's eyes L and R.

The electronic device 101 according to an embodiment may divide the 3D rendering space into a front (positive) space of the display area of the 3D display 230 and a rear (negative) space of the display area of the 3D display.

The electronic device 101 according to an embodiment may identify whether an object (not shown) on a 3D screen displayed on the 3D display 230 is located in the front space of the 3D rendering space. In an embodiment, when the object (not shown) is located in the front space of the 3D rendering space, the electronic device 101 may identify whether a culling phenomenon occurs, in which the object (not shown) is partially clipped by leaving the 3D rendering space or a free display space (free zone) described later.

In an embodiment, the electronic device 101 may display a preview of the object O moved in the 3D rendering space through the 3D display 230 or 160 based on a user input.

In an embodiment, when the object (not shown) is located in the front space of the 3D rendering space, the electronic device 101 may provide a feedback related to the movement of the object corresponding to the user input.

In an embodiment, when the object O is located in the rear space of the 3D rendering space, the electronic device 101 may not identify whether the object O leaves the 3D rendering space or the free display space described later. Because the culling phenomenon occurring in the rear space of the 3D rendering space may be accepted by the user as a natural phenomenon, it may not be determined whether the culling phenomenon occurs. Accordingly, unnecessary computation may be skipped, and the rendering speed of the object (not shown) may be improved.

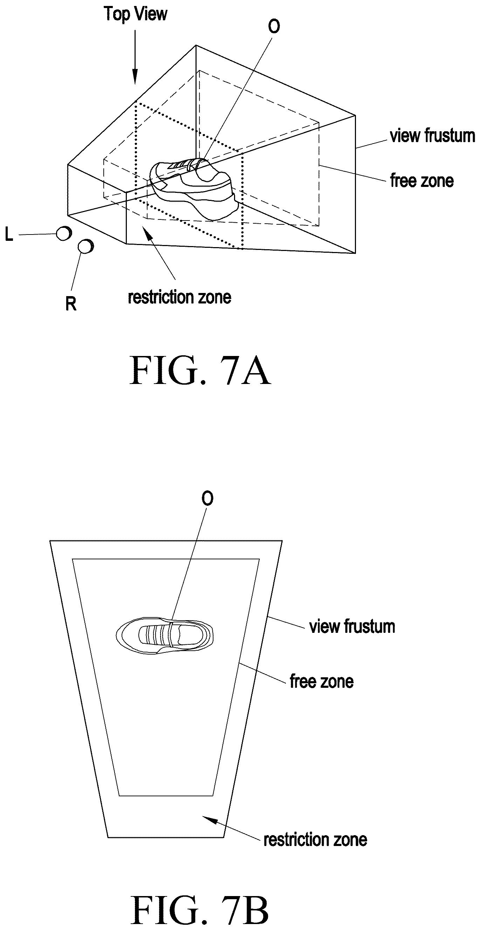

FIG. 7A illustrates a free display space and a restriction display space (restriction zone) inside a 3D rendering space according to an embodiment of the disclosure. FIG. 7B is a plan view of FIG. 7A.

Referring to FIGS. 7A and 7B, the electronic device 101 according to an embodiment may set the free display space inside the 3D rendering space. The electronic device 101 according to an embodiment may set a space outside the free display space within the 3D rendering space as the restriction display space. In an embodiment, the electronic device 101 may divide the 3D rendering space into the free display space and the restriction display space so that it may pre-detect that the object O is adjacent to the boundary of the 3D rendering space.

For example, the electronic device 101 may set a free display space having a boundary that is inwardly separated by a designated distance from the boundary of the 3D rendering space. For example, the electronic device 101 may set the free display space by applying a margin of a designated size inward into the 3D rendering space.

The electronic device 101 according to an embodiment may freely move, rotate, and/or scale the object O located inside the free display space.

The electronic device 101 according to an embodiment may identify whether at least a portion of the object O leaves the free display space in response to a user input. As the positions of the user's eyes L and R change, the electronic device 101 according to an embodiment may identify whether at least a portion of the object O leaves the free display space.

In an embodiment, when identifying that the at least portion of the object O leaves the free display space due to the user input, the electronic device 101 may provide a feedback related to at least one of rotation, movement, or reduction of the object O in response to the user input.

In an embodiment, the electronic device 101 may restrict the movement, rotation, enlargement, and/or reduction of the object O located at least partially in the restriction display space, or provide a feedback for the user input.

When identifying that the at least portion of the object O leaves the 3D rendering space or the free display space, the electronic device 101 according to an embodiment may determine the transformation type and/or transformation weight of the feedback to be provided in response to the user input.

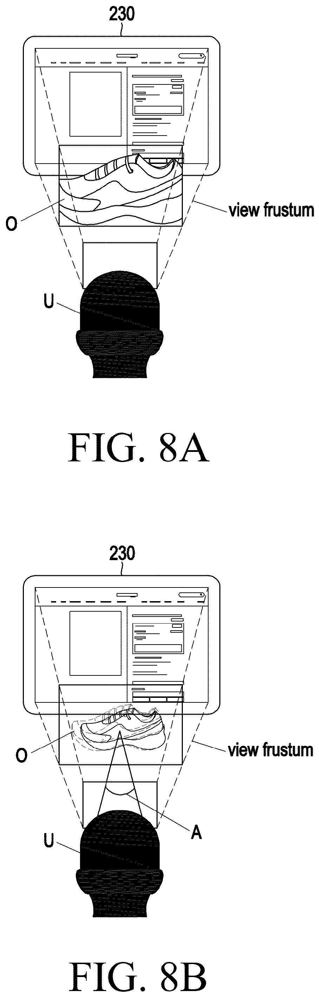

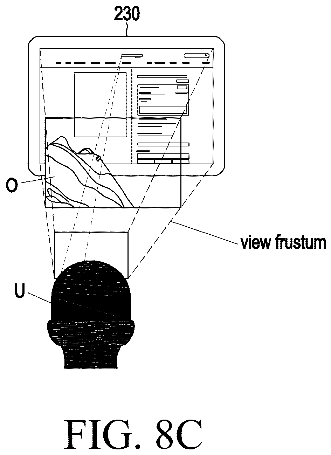

FIG. 8A illustrates a state where the object O is rotated, moved, or enlarged so that it leaves the 3D rendering space according to an embodiment of the disclosure. FIG. 8B illustrates a state where images of the object O overlap due to enlargement or movement at or above a threshold according to an embodiment of the disclosure. FIG. 8C illustrates a state where the object O leaves the 3D rendering space according to the positions of the user's eyes L and R, according to an embodiment of the disclosure.

Referring to FIG. 8A, in the electronic device 101 according to an embodiment, the object O included in the 3D screen displayed on the 3D display 230 may be moved, rotated, enlarged, or reduced according to an input of a user U. For example, the 3D object O included in the 3D screen may be rotated, moved, or enlarged so that it leaves the 3D rendering space. When at least a portion of the object O is clipped outside the 3D rendering space in this way, the immersion of the user U in the object O displayed stereoscopically may be broken.

Referring to FIG. 8B, as the electronic device 101 according to an embodiment rotates, moves, or enlarges the object O by a threshold or greater, at least a portion of the object O may leave the 3D rendering space in the forward direction of the 3D display 230. When the at least portion of the object O is rotated, moved, or enlarged by the threshold or greater in the forward direction of the 3D display 230 in this way, the object O may appear to overlap in two images, which may break the immersion of the user U in the 3D displayed object O.

Referring to FIG. 8C, as the positions of the user's eyes L and R change, the electronic device 101 according to an embodiment may set the 3D rendering space differently. For example, when the user U moves outward from the display area relative to the 3D display 230, at least a portion of the object O located inside the 3D rendering space may leave the newly set 3D rendering space. When the at least portion of the object O is clipped outside the 3D rendering space in this way, the immersion of the user U in the 3D displayed object O may be broken.

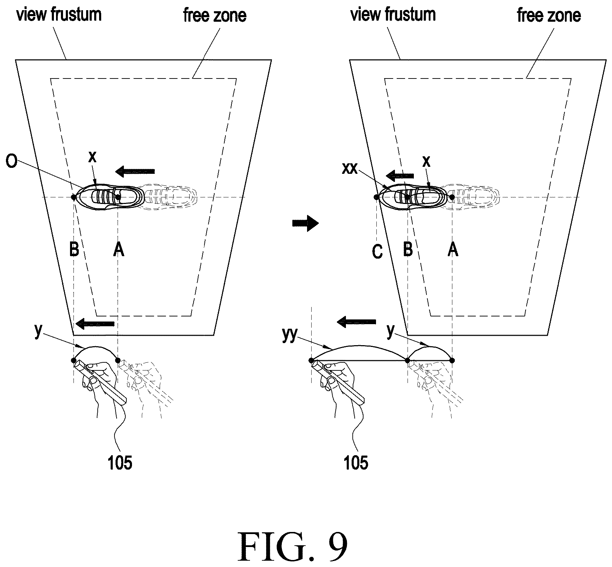

FIG. 9 illustrates an embodiment of adjusting a moving speed based on a movement input for the object O in the electronic device 101 according to an embodiment of the disclosure.

Referring to FIG. 9, the electronic device 101 according to an embodiment may receive a movement input of the user U for the object O included in the 3D screen displayed on the 3D display 230. For example, the movement input of the user U for the object O may include a drag input or a sliding input for the object O.

In an embodiment, when the electronic device 101 receives the movement input of user U for the object O inside the free display space, it may move the object O displayed on the 3D display 230 in real time. For example, the electronic device 101 may move the object O proportionally by a distance x from position A to position B in response to a movement of y of a touch input or the input device inside the free display space.

The electronic device 101 according to an embodiment may identify whether at least a portion of the object O leaves the free display space due to the movement input of the user U. For example, the electronic device 101 may identify that an end portion of the object O leaves the free display space at position B.

When identifying that the at least portion of the object O leaves the free display space, the electronic device 101 according to an embodiment may adjust the moving speed of the object O according to the movement input of the user U. For example, the electronic device 101 may slow down the movement distance of the object O moving in response to the movement input of the user U. For example, the electronic device 101 may move the object O by a distance xx from position B to position C, in response to a relatively long movement of yy of the touch input or the input device.

When the input of the user U for the object O is a movement input in a direction parallel to the display area of the 3D display 230, the electronic device 101 according to an embodiment may adjust the moving speed of the object O according to the movement input of the user U.

Therefore, when at least a portion of the object O leaves the free display space, the user U may perceive that the movement of the object O is slowed down in response to the movement input, and may be induced to determine that the movement of the object O is difficult.

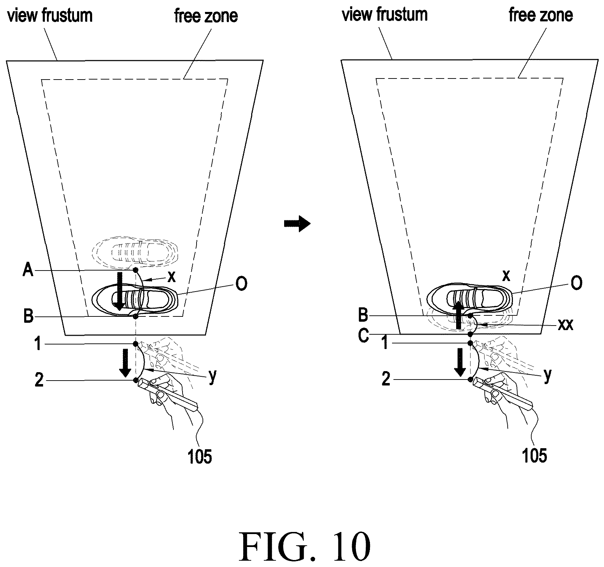

FIG. 10 illustrates an embodiment of moving the object O in a reverse direction of a movement input for the object O in the electronic device 101 according to an embodiment of the disclosure.

Referring to FIG. 10, the electronic device 101 according to an embodiment may receive a movement input of the user U for the object O included in the 3D screen displayed on the 3D display 230. In an embodiment, when the electronic device 101 receives the movement input of the user U for the object O inside the free display space, it may move the object O displayed on the 3D display 230 in real time. For example, the electronic device 101 may move the object O proportionally by a distance x from position A to position B in response to a movement of y of a touch input or the input device from position 1 to position 2 inside the free display space.

The electronic device 101 according to an embodiment may identify whether at least a portion of the object O leaves the free display space in response to the movement input of the user U. For example, the electronic device 101 may identify that the end portion of the object O leaves the free display space at position B.

When identifying that at least a portion of the object O leaves the free display space, the electronic device 101 according to an embodiment may move the object O in the reverse direction of the movement input for the object O. For example, the electronic device 101 may move the object O in the direction reverse to the direction of the movement input of the user U.

For example, the electronic device 101 may move the object O from position B to position C in response to a movement of y of the touch input or the input device from position 1 to position 2, and then move the object O from position C to position B in the reverse direction of the movement. For example, the electronic device 101 may move the object O by a distance xx which is relatively shorter than the distance x that the object O moves from position A to position B in response to the movement of y of the touch input or the input device from position 1 to position 2 inside the free display space.

The electronic device 101 according to an embodiment may move the object O to a designated position (e.g., position B where the end portion of the object O leaves the free display space) in the reverse direction of the movement by applying a bounce back effect, like the object O being bounced in the reverse direction, in response to the movement of y of the touch input or the input device.

The electronic device 101 according to an embodiment may identify a material property of the object O and, when the identified material property of the object O is an elastic body, move the object O in the reverse direction of the movement input of the user U.

In an embodiment, the material property of the object O may be variously applied, such as plastic, wood, cement, or stone. For example, the material property of the object O may be an elastic body having elasticity, such as rubber, or a magnetic body that reacts to magnetism, such as metal.

Therefore, when at least a portion of the object O leaves the free display space, the user U may be induced to determine that the movement of the object O is difficult by the object O moving in the reverse direction of the movement input.

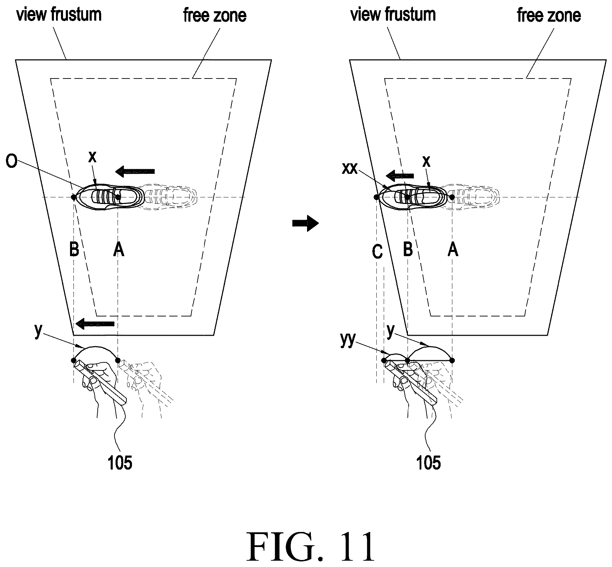

FIG. 11 illustrates an embodiment of moving the object O to a designated position based on a movement input for the object O in the electronic device 101 according to an embodiment of the disclosure.

Referring to FIG. 11, the electronic device 101 according to an embodiment may receive a movement input of the user U for the object O included in the 3D screen displayed on the 3D display 230.

In an embodiment, when the electronic device 101 receives the movement input of the user U for the object O inside the free display space, it may move the object O displayed on the 3D display 230 in real time. For example, the electronic device 101 may move the object O proportionally by a distance x from position A to position B in response to a movement of y of a touch input or the input device inside the free display space.

The electronic device 101 according to an embodiment may identify whether at least a portion of the object O leaves the free display space due to the movement input of user U. For example, the electronic device 101 may identify that the end portion of the object O leaves the free display space at position B.

When identifying that the at least portion of the object O leaves the free display space, the electronic device 101 according to an embodiment may move the object O to a designated position according to the movement input of the user U. For example, the designated position may be a position moved in the forward direction (e.g., a parallel direction or the same direction) of the movement input of the user U. For example, the electronic device 101 may move the object O from position B to position C which is moved by xx in response to a movement of yy of the touch input or the input device.

The electronic device 101 according to an embodiment may set the designated position as the boundary of the 3D rendering space spaced apart in the forward direction of the movement input of the user U.

In an embodiment, when identifying that at least a portion of the object O leaves the free display space, the electronic device 101 may move the object O to the designated position by applying a snap effect, like sticking to a magnet, in response of the movement input of the user U.

The electronic device 101 according to an embodiment may identify the material property of the object O and, when the identified material property of the object O is a magnetic body, move it to a designated position corresponding to the forward direction of the movement input of the user U.

Therefore, when at least a portion of the object O leaves the free display space, the user U may perceive that the object O moves to the designated position according to the movement input, and may be induced to recognize a limit point of the movement of the object O.

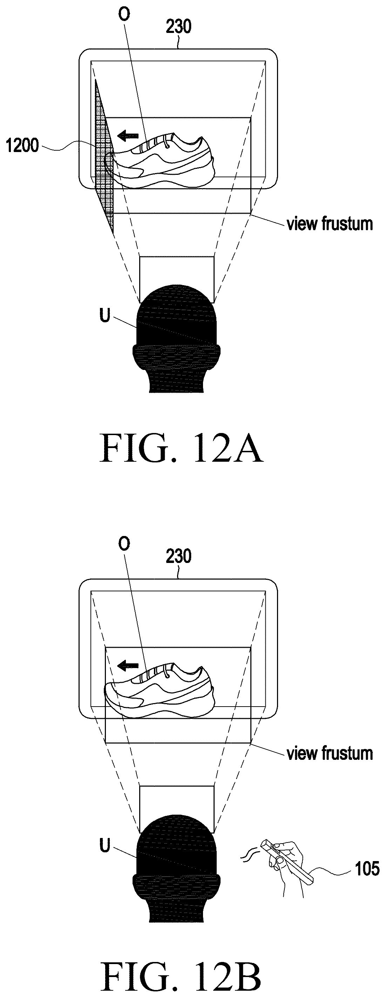

FIG. 12A illustrates an embodiment of displaying a boundary plane according to a movement of the object O according to an embodiment of the disclosure. FIG. 12B illustrates an embodiment of providing a haptic feedback according to a movement of the object O according to an embodiment of the disclosure.

Referring to FIG. 12A, when the electronic device 101 according to an embodiment snaps the object O to a designated position corresponding to the forward direction of a movement input or bounces the object O in the reverse direction of the movement input in response to the movement input of the user U for the object O, it may provide an additional visual effect to enhance the awareness of the user U.

In an embodiment, when the electronic device 101 snaps the object O to the designated position corresponding to the forward direction of the movement input or bounces the object O in the reverse direction of the movement input, it may display a virtual plane at the designated position. In an embodiment, the electronic device 101 may display a virtual plane 1200 on a boundary surface of the 3D rendering space corresponding to the forward direction of the movement input for the object O. In an embodiment, the electronic device 101 may apply a grid effect that displays a grid on the virtual plane 1200.

Referring to FIG. 12B, when the electronic device 101 according to an embodiment snaps the object O to a designated position corresponding to the forward direction of a movement input or bounces the object O in the reverse direction of the movement input in response to the movement input of the user U for the object O, it may provide a haptic effect (e.g., tactile effect) to enhance the awareness of the user U.

In an embodiment, when the electronic device 101 snaps the object O to the designated position corresponding to the forward direction of the movement input or bounces the object O in the reverse direction of the movement input, it may provide a haptic effect that generates mechanical vibration or electrical stimulation in the electronic device 101 (e.g., haptic module 179 of FIG. 1) or the input device.

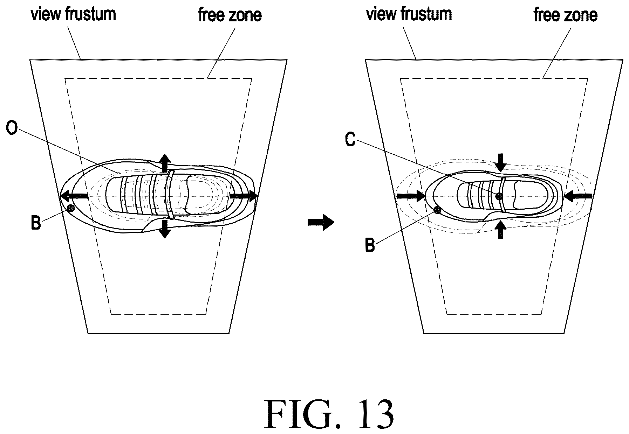

FIG. 13 illustrates an embodiment of enlarging the object O according to an enlargement input for the object O in the electronic device 101, according to an embodiment of the disclosure.

Referring to FIG. 13, the electronic device 101 according to an embodiment may receive a size change input of the user U for the object O included in the 3D screen displayed on the 3D display 230.

In an embodiment, when the electronic device 101 receives an enlargement or reduction input of the user U for the object O inside the free display space, it may enlarge or reduce the object O displayed on the 3D display 230 in real time. For example, the electronic device 101 may enlarge the object O in response to an enlargement input via a touch input or the input device, inside the free display space.

The electronic device 101 according to an embodiment may identify whether at least a portion of the object O leaves the free display space due to the enlargement input of the user U. For example, the electronic device 101 may identify that an end portion B of the object O leaves the free display space.

When identifying that at least a portion of the object O (e.g., the end portion B of the object O) leaves the free display space, the electronic device 101 according to an embodiment may reduce the object O so that the object O is located within the free display space. For example, the electronic device 101 may enlarge or reduce the object O based on a center point C of the object O.

Therefore, when at least a portion of the object O leaves the free display space, the user U may perceive that the object O is reduced according to to the enlargement input for the object O, and may be induced to recognize the limit of the enlargement of the object O.

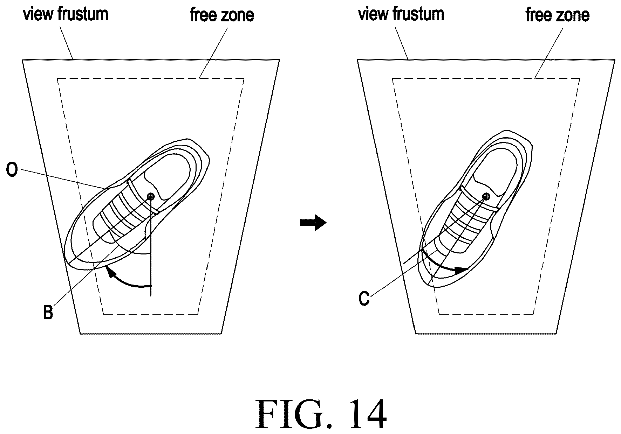

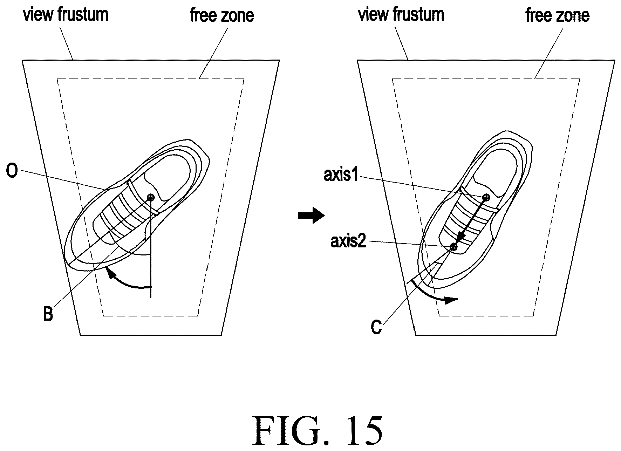

FIG. 14 illustrates an embodiment of rotating the object O according to a rotation input for the object O in the electronic device 101, according to an embodiment of the disclosure. FIG. 15 illustrates an embodiment of moving a rotation axis of the object O according to a rotation input for the object O in the electronic device 101, according to an embodiment of the disclosure.

Referring to FIGS. 14 and 15, the electronic device 101 according to an embodiment may receive a rotation input of the user U for the object O included in the 3D screen displayed on the 3D display 230.

In an embodiment, when the electronic device 101 receives the rotation input for the object O inside the 3D rendering space, it may rotate the object O displayed on the 3D display 230 in real time. For example, inside the 3D rendering space, the electronic device 101 may rotate the object O in response to a rotation input via a touch input or the input device. For example, the electronic device 101 may rotate the object O using the center point of the object O as a rotation axis, axis 1.

In an embodiment, the electronic device 101 may identify whether at least a portion of the object O leaves the 3D rendering space based on the rotation input of the user U for the object O. For example, as the object O is rotated by a rotation angle B based on the rotation input of the user U, the electronic device 101 may identify that at least a portion of the object O (e.g., an end portion of the object O) leaves the 3D rendering space.

In an embodiment, the electronic device 101 may rotate the object O in the reverse direction of the rotation input of the user U. In an embodiment, the electronic device 101 may rotate the object O by a rotation angle C at which at least a portion of the object O that moved outward from the 3D rendering space due to the rotation of the object O is pulled back inside the 3D rendering space. For example, the electronic device 101 may rotate the object O using the center point axis 1 of the object O as a rotation axis.

In an embodiment, the electronic device 101 may move a rotation axis, axis 2 of the object O toward the at least portion of the object O that leaves the 3D rendering space. In an embodiment, along with the movement of the rotation axis, axis 2 of the object O, the electronic device 101 may rotate the object O by the rotation angle C at which the at least portion of the object O that moves outward from the 3D rendering space due to the rotation of the object O is pulled back inside the 3D rendering space. Accordingly, the rotation range and/or rotation radius of the object O may be reduced.

Therefore, when at least a portion of the object O leaves the 3D rendering space, the user U may perceive that the object O is rotated in the reverse direction according to to the rotation input for the object O, and may be induced to recognize the limit of the rotation of the object O.

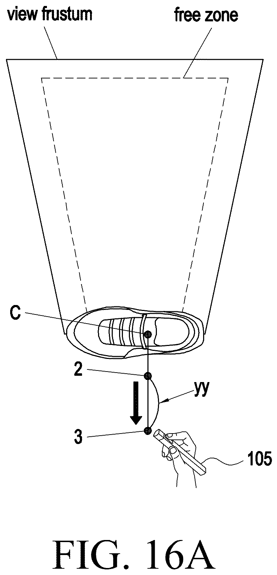

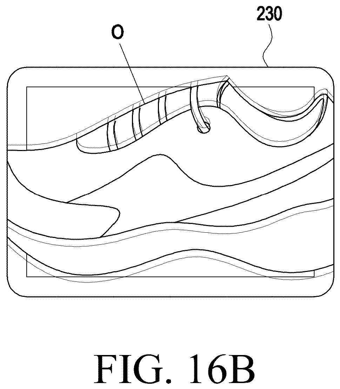

FIG. 16A illustrates an input of the user U exceeding a designated range according to an embodiment of the disclosure. FIG. 16B illustrates an embodiment of applying a depth of field effect to at least a portion of an edge of the object O according to an embodiment of the disclosure.

Referring to FIGS. 16A and 16B, the electronic device 101 according to an embodiment may identify whether the size of an input of the user U is within a designated range. In an embodiment, when at least a portion of the object O leaves the 3D rendering space or the free display space, the electronic device 101 may identify whether the size of the input of the user U from a position where the at least portion of the object O leaves the 3D rendering space or the free display space is within the designated range.

As illustrated in FIG. 16A, a movement input of the user U according to an embodiment may have a size of yy, moving from position 2 to position 3, starting from a position where at least a portion of the object O leaves the 3D rendering space. For example, the electronic device 101 may identify that the size yy of the movement input of the user U exceeds the designated range.

For example, the designated range may be set as a designated distance from a position where at least a portion of the object O leaves the 3D rendering space.

In an embodiment, based on identifying that the size of the input of the user U exceeds the designated range, the electronic device 101 may apply a designated visual effect to the object O through the 3D display 230.

In an embodiment, the visual effect may be an effect applied so as not to impair the 3D sense of immersion in the object O a portion of which is leaving or is likely to leave the 3D rendering space.

As illustrated in FIG. 16B, in an embodiment, based on identifying that the size of an input of the user U exceeds a designated range, the electronic device 101 may apply a depth of field effect to at least a portion of an edge of the object O. Accordingly, the edge of the object O which leaves the 3D rendering space is displayed faintly, which may provide a buffering effect against visual awkwardness.

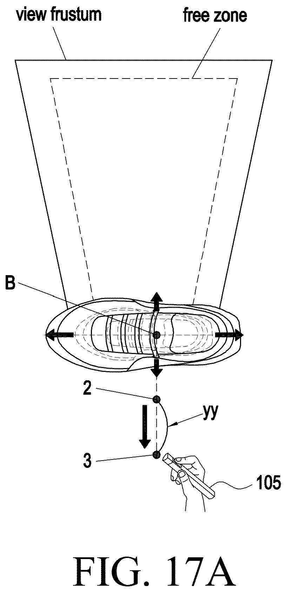

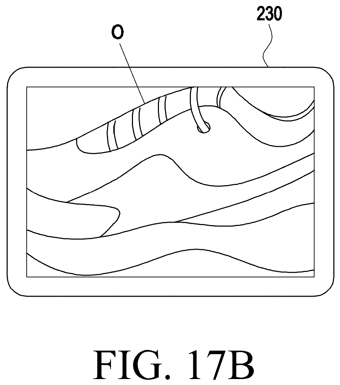

FIG. 17A illustrates an input of the user U exceeding a designated range according to an embodiment of the disclosure. FIG. 17B illustrates an embodiment of limiting the movement of the object O in the depth direction of the 3D display 230 according to an embodiment of the disclosure.

Referring to FIGS. 17A and 17B, the electronic device 101 according to an embodiment may identify whether the size of an input of the user U is within a designated range. In an embodiment, when at least a portion of the object O leaves the 3D rendering space or the free display space, the electronic device 101 may identify whether the size of the input of the user U from a position where the at least portion of the object O leaves the 3D rendering space or the free display space is within the designated range.

As illustrated in FIG. 17A, a movement input of the user U according to an embodiment may have a size of yy from position 2 to position 3, starting from a position where at least a portion of the object O leaves the 3D rendering space. For example, the electronic device 101 may identify that the size yy of the movement input of the user U exceeds the designated range.

In an embodiment, based on identifying that the size of the input of the user U exceeds the designated range, the electronic device 101 may apply a designated visual effect to the object O through the 3D display 230.

As illustrated in FIG. 17B, in an embodiment, based on identifying that the size of the movement input of the user U in the depth direction of the 3D display 230 exceeds the designated range, the electronic device 101 may limit the movement of the object O in the depth direction of the 3D display 230.

Accordingly, for the object O moving forward of the 3D display 230 while leaving the 3D rendering space, the electronic device 101 may prevent an image of the object O from being perceived as two by limiting the movement of the object O.

In an embodiment, based on identifying that the size of the movement input of the user U in the depth direction of the 3D display 230 exceeds the designated range, the electronic device 101 may display the object O enlarged while limiting the movement of the object O in response to the movement input of the user U in the depth direction of the 3D display 230.

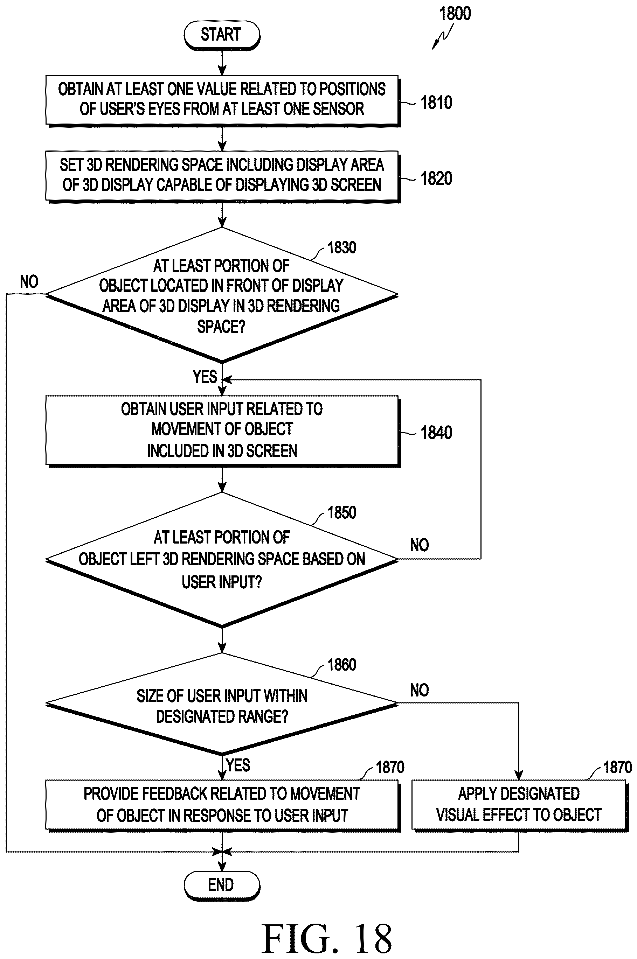

FIG. 18 is a flowchart 1800 illustrating a method for operating the electronic device 101 according to an embodiment of the disclosure.

Referring to FIG. 18, the electronic device 101 according to an embodiment may obtain at least one value related to the positions of the eyes L and R of the user U from the at least one sensor 240 or 176 in operation 1810. For example, the electronic device 101 may obtain at least one value related to the position of the user U, the position of the face of the user U, and/or the positions of the user's eyes L and R from the eye-tracking sensor 240.

In operation 1820, the electronic device 101 according to an embodiment may set a 3D rendering space including the display area 235 of the 3D display 230 or 160 capable of displaying a 3D screen. In an embodiment, the electronic device 101 may identify the positions of the eyes L and R of the user U, based on the at least one value related to the positions of the eyes L and R of the user U, and set the 3D rendering space based on the identified positions of the eyes L and R.

In operation 1830, the electronic device 101 according to an embodiment may identify whether at least a portion of the object O is located in front of the display area 235 of the 3D display 230 or 160 in the 3D rendering space.

When identifying that the at least portion of the object O is located in front of the display area 235 of the 3D display 230 or 160 in the 3D rendering space (operation 1830-yes), the electronic device 101 according to an embodiment may obtain an input of the user U related to a movement of the object O included in a 3D screen in operation 1840.

In an embodiment, the input of the user U related to the movement of the object O may be related to rotation, enlargement, and/or reduction of the object O.

According to an embodiment, the electronic device 101 may display a preview of the object O moved in the 3D rendering space through the 3D display 230 or 160, based on the input of the user U related to the movement of the object O.

When identifying that the at least portion of the object O is not located in front of the display area 235 of the 3D display 230 or 160 in the 3D rendering space (operation 1830-no), the electronic device 101 according to an embodiment may not identify a relative position of the object in the 3D rendering space or not provide a feedback that adjusts display of the object in the 3D rendering space, even if the input of the user U occurs.

In operation 1850, the electronic device 101 according to an embodiment may identify whether at least a portion of the object O leaves the 3D rendering space, based on the input of the user U. In an embodiment, the electronic device 101 may monitor whether at least a portion of the object O rotated, reduced, or enlarged by the input of the user U leaves the 3D rendering space.

When identifying that the at least portion of the object O leaves the 3D rendering space based on the input of the user U (operation 1850-yes), the electronic device 101 according to an embodiment may identify whether the size of the input of the user U is within a designated range in operation 1860.

When identifying that the least portion of the object O does not leave the 3D rendering space based on the input of the user U (operation 1850-no), the electronic device 101 according to an embodiment may obtain an input of the user U again in operation 1840.

When the size of the input of the user U is within the designated range (operation 1860-yes), the electronic device 101 according to an embodiment may provide a feedback related to at least one of rotation, movement, or reduction of the object O or the preview, in response to the input of the user U, in operation 1870.

The electronic device 101 according to an embodiment may display the preview corresponding to the input of the user U, while the input of the user U is maintained. The electronic device 101 according to an embodiment may display the feedback at a time when it is identified that the input of the user is released.

The electronic device 101 according to an embodiment may display the preview corresponding to the input of the user U at a time when the input of the user is identified. The electronic device 101 according to an embodiment may display the feedback after a preset time from the time when the input of the user is identified.

In another embodiment, the input of the user may include an input by a stylus pen or a controller that transmits an operation input according to a slider or coordinates. In another embodiment, the input of the user may include a touch input.

For example, the feedback may correspond to the input of the user U for the object O, and induce the user U to recognize that a culling phenomenon occurs in the 3D displayed object O because the object O is leaving or is highly likely to leave the 3D rendering space,.

When the size of the input of the user U exceeds the designated range (operation 1860-no), the electronic device 101 according to an embodiment, may apply a designated visual effect to the object O in operation 1880. In an embodiment, when an input of the user U having a size exceeding the designated range occurs on the object O, the electronic device 101 may rotate, reduce, or enlarge the object O to correspond to the input of the user U. In an embodiment, when the input of the user U having the size exceeding the designated range occurs on the object O, the electronic device 101 may apply a visual effect to the object O, which reduces the sense of unfamiliarity regarding the culling phenomenon occurring on the object O.

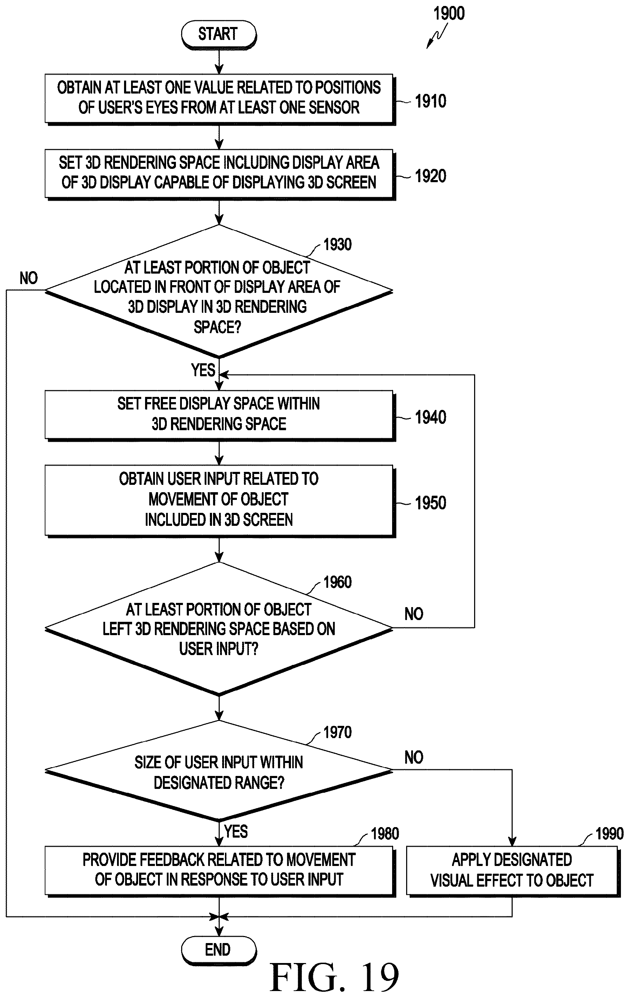

FIG. 19 is a flowchart 1900 illustrating a method for operating the electronic device 101 according to an embodiment of the disclosure.

Referring to FIG. 19, the electronic device 101 according to an embodiment may obtain at least one value related to the positions of the eyes L and R of the user U from the at least one sensor 240 or 176 in operation 1910.

In operation 1920, the electronic device 101 according to an embodiment may set a 3D rendering space including the display area 235 of the 3D display 230 or 160 capable of displaying a 3D screen.

In operation 1930, the electronic device 101 according to an embodiment may identify whether at least a portion of the object O is located in front of the display area 235 of the 3D display 230 or 160 in the 3D rendering space.

When identifying that the at least portion of the object O is located in front of the display area 235 of the 3D display 230 or 160 in the 3D rendering space (operation 1930-yes), the electronic device 101 according to an embodiment may set a free display space inside the 3D rendering space in operation 1940. In an embodiment, the electronic device 101 may set the free display space by applying a margin of a specific distance from the boundary of the 3D rendering space. In an embodiment, the electronic device 101 may set a space that is inside the 3D rendering space and outside the free display space as a restriction display space.

In operation 1950, the electronic device 101 according to an embodiment may obtain an input of the user U related to rotation, movement, or enlargement of the object O included in a 3D screen.

The electronic device 101 according to an embodiment may display a preview of the object O moved in the 3D rendering space through the 3D display 230 or 160, based on the input of the user U related to a movement of the object O.

When identifying that the at least portion of the object O is not located in front of the display area 235 of the 3D display 230 or 160 in the 3D rendering space (operation 1930-no), the electronic device 101 according to an embodiment may not identify a relative position of a preview corresponding to the input of the user U for the object O relative to the 3D rendering space, or not provide a feedback based on the relative position to the 3D rendering space, even if the input of the user U occurs.

In operation 1960, the electronic device 101 according to an embodiment may identify whether at least a portion of the object O leaves the free display space based on the input of the user U. In an embodiment, the electronic device 101 may monitor whether at least a portion of the object O being rotated, moved, or enlarged by the input of the user U leaves the free display space and moves into the restriction display space.

When identifying that the at least portion of the object O leaves the free display space based on the input of the user U (operation 1960-yes), the electronic device 101 according to an embodiment may identify whether the size of the input of the user U is within a designated range in operation 1970.

When identifying that the at least portion of the object O does not leave the free display space based on the input of the user U (operation 1960-no), the electronic device 101 according to an embodiment may obtain an input of the user U again in operation 1950.

When the size of the input of the user U is within the designated range (operation 1970-yes), the electronic device 101 according to an embodiment may provide a feedback related to the movement of the object O corresponding to the input of the user U in operation 1980.

When the size of the input of the user U exceeds the designated range (operation 1970-no), the electronic device 101 according to an embodiment may apply a designated visual effect to the object O in operation 1990.

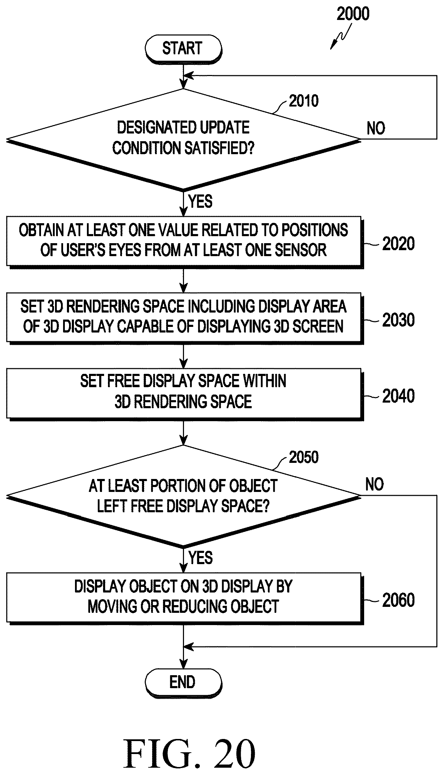

FIG. 20 is a flowchart 2000 illustrating a method for operating the electronic device 101 according to an embodiment of the disclosure.

Referring to FIG. 20, the electronic device 101 according to an embodiment may determine whether a designated update condition is satisfied in operation 2010. In an embodiment, the designated update condition may be a condition for updating at least one value related to the positions of the eyes L and R of the user U from the at least one sensor 240 or 176, or a condition for updating a 3D rendering space of the 3D display 230 or 160.

For example, the electronic device 101 may obtain at least one value related to the positions of the eyes L and R of the user U from the at least one sensor 240 or 176 according to a designated periodicity. For example, as the obtained at least one value related to the positions of the eyes L and R of the user U changes, the electronic device 101 may be configured to update the position of the user U or the positions of the user's eyes L and R.

When determining that the designated update condition is satisfied (operation 2010-yes), the electronic device 101 according to an embodiment may obtain at least one value related to the positions of the eyes L and R of the user U from the at least one sensor 240 or 176 in operation 2020.

When determining that the designated update condition is not satisfied (operation 2010-no), the electronic device 101 according to an embodiment may determine again whether the designated update condition is satisfied in operation 2010.

In operation 2030, the electronic device 101 according to an embodiment may set a 3D rendering space including the display area 235 of the 3D display 230 or 160 capable of displaying a 3D screen.

Additionally, the electronic device 101 may optionally perform an operation of identifying whether at least a portion of the object O is located in front of the display area 235 of the 3D display 230 or 160 in the 3D rendering space.

In operation 2040, the electronic device 101 according to an embodiment may set a free display space inside the 3D rendering space. In an embodiment, the electronic device 101 may set the free display space by applying a margin of a specific distance from the boundary of the 3D rendering space.

In operation 2050, the electronic device 101 according to an embodiment may identify whether at least a portion of the object O leaves the free display space. In an embodiment, as the position of the user U, the position of the face of the user U, or the positions of the eyes L and R change, the 3D rendering space and/or the free display space may change.

In an embodiment, the electronic device 101 may identify whether the object O in the 3D screen displayed on the 3D display 230 or 160 leaves the newly updated 3D rendering space and/or free display space. For example, the electronic device 101 may identify whether the object O leaves the 3D rendering space and/or the free display space so as to match a situation where the object O is rotated, moved, or enlarged by an input of the user U.

The electronic device 101 according to an embodiment may skip the operation of setting the free display space and instead identify whether at least a portion of the object O leaves the 3D rendering space.

In operation 2060, the electronic device 101 according to an embodiment may rotate, move, or reduce the object O and display it on the 3D display 230 or 160.

In an embodiment, when the at least portion of the object O leaves the 3D rendering space and/or the free display space, the electronic device 101 may move the object O into the 3D rendering space and/or the free display space. In an embodiment, when the at least portion of the object O leaves the 3D rendering space and/or the free display space, the electronic device 101 may reduce the object O so that the at least portion of the object O that moves to the outside is located inside the 3D rendering space and/or the free display space.

The method for operating the electronic device 101 described in conjunction with FIG. 20 may further include operations described in conjunction with FIG. 18 and/or FIG. 19. A detailed description of the operations is avoided due to redundancy.

The technical objects to be achieved in the disclosure are not limited to the technical objects mentioned above, and other technical objects not mentioned will become apparent to those skilled in the art from the following description.

The effects that may be obtained from the disclosure are not limited to the effects mentioned above, and other effects not mentioned will become apparent to those skilled in the art from the following description.

The electronic device 101 according to an embodiment of the disclosure may include the 3D display 230 or 160 capable of displaying a 3D screen, the at least one sensor 240 or 176 configured to measure at least one value related to positions of the eyes L and R of the user U, and the at least one processor 210 or 120. The at least one processor 210 or 120 may be configured to obtain the at least one value from the at least one sensor 240 or 176.

The at least one processor 210 or 120 may be configured to set a 3D rendering space including the display area 235 of the 3D display 230 or 160, based on the at least one value.

The at least one processor 210 or 120 may be configured to obtain an input related to moving an object O included in the 3D rendering space displayed through the 3D display.

The at least one processor 210 or 120 may display a preview of the object O moved in the 3D rendering space through the 3D display 230 or 160, based on the input.

After the preview is displayed, the at least one processor 210 or 120 may provide a feedback adjusting displaying of the object O in the 3D rendering space, based on a position of the object O corresponding to the input in the 3D rendering space.

In the electronic device 101 according to an embodiment, the 3D display 230 or 160 may include the lenticular lens 510 or the parallax barrier 520 disposed in front of the display area 235 to induce binocular parallax.

In the electronic device 101 according to an embodiment, the input may include an input for rotating the object O displayed in the 3D rendering space.

In the electronic device 101 according to an embodiment, the input may include an input for reducing or enlarging the object O displayed in the 3D rendering space.

In the electronic device 101 according to an embodiment, the at least one processor 210 or 120 may be configured to set the 3D rendering space extended forward and backward of the display area 235 of the 3D display 230 or 160, as at least part of setting the 3D rendering space. The at least one processor 210 or 120 may be configured to identify whether at least a portion of the object O is disposed in front of the display area 235 in the 3D rendering space. The at least one processor 210 or 120 may be configured to, based on identifying that the at least portion of the object O is disposed in front of the display area 235, provide a feedback related to at least one of rotating, reducing, or enlarging the object O.

In the electronic device 101 according to an embodiment, the at least one processor 210 or 120 may be configured to set a free display space in the 3D rendering space.

The at least one processor 210 or 120 may be configured to, in response to the input, identify whether the at least portion of the object O leaves the free display space. The at least one processor 210 or 120 may be configured to, based on identifying that the at least portion of the object O leaves the free display space, provide a feedback related to at least one of rotating, reducing, or enlarging the object O.

In the electronic device 101 according to an embodiment, the at least one processor 210 or 120 may be configured to, based on identifying that the at least portion of the object (O) leaves the free display space, adjust a moving speed of the object O according to the input, as at least part of providing the feedback.

In the electronic device 101 according to an embodiment, the at least one processor 210 or 120 may be configured to, based on identifying that the at least portion of the object O leaves the free display space, move the object O to a designated position corresponding to a direction of the input, or move the object O in a reverse direction of the input, as at least part of providing the feedback.

In the electronic device 101 according to an embodiment, the at least one processor 210 or 120 may be configured to identify a property of the object O. The at least one processor 210 or 120 may be configured to, based on the property of the object O, snap the object O to the designated position corresponding to the direction of the input, or bounce the object O in the reverse direction of the input, as at least part of providing the feedback.

In the electronic device 101 according to an embodiment, the at least one processor 210 or 120 may be configured to, based on the input for enlarging the object O, identify whether the at least portion of the object O leaves the free display space, as at least part of identifying whether the at least portion of the object O leaves the free display space. The at least one processor 210 or 120 may be configured to, based on identifying that the at least portion of the object O leaves the free display space, reduce the object O such that the object O is located within the free display space, as at least part of providing the feedback.

In the electronic device 101 according to an embodiment, the at least one processor 210 or 120 may be configured to, based on the input for rotating the object O, identify whether at least a portion of the object O leaves the 3D rendering space. The at least one processor 210 or 120 may be configured to, based on identifying that the at least portion of the object O leaves the 3D rendering space, rotate the object O in a reverse direction of the input for rotating the object O, as at least part of providing the feedback.

In the electronic device 101 according to an embodiment, the at least one processor 210 or 120 may be configured to move an axis of rotation of the object O toward the at least portion of the object O leaving the 3D rendering space, as at least part of providing the feedback.

In the electronic device 101 according to an embodiment, the at least one processor 210 or 120 may be configured to identify whether a size of the input is within a designated range. The at least one processor 210 or 120 may be configured to, based on identifying that the size of the input exceeds the designated range, apply a designated visual effect to the object O through the 3D display 230 or 160.

In the electronic device 101 according to an embodiment, the at least one processor 210 or 120 may be configured to apply a depth of field effect to at least a portion of an edge of the object O, or limit a movement of the object O in a depth direction of the 3D display 230 or 160, as at least part of applying the designated visual effect to the object O.

A method for operating the electronic device 101 according to an embodiment of the disclosure may include obtaining 1810 or 1910, from the at least one sensor 240 or 176, at least one value related to positions of the eyes L and R of the user U.

The method for operating the electronic device 101 according to an embodiment may include, based on the at least one value, setting 1820 or 1920 a 3D rendering space including the display area 235 of the 3D display 230 or 160 capable of displaying a 3D screen.

The method for operating the electronic device 101 according to an embodiment may include obtaining 1840 or 1950 an input related to moving the object O included in the 3D rendering space displayed through the 3D display.

The method for operating the electronic device 101 according to an embodiment may include, based on the input, displaying, through the 3D display 230 or 160, a preview of the object O moved in the 3D rendering space.

The method for operating the electronic device 101 according to an embodiment may include, based on a position of the object O corresponding to the input in the 3D rendering space, providing 1870 or 1980 a feedback adjusting displaying of the object O in the 3D rendering space, after the preview is displayed.

In the method for operating the electronic device 101 according to an embodiment, setting 1820 or 1920 the 3D rendering space may include setting the 3D rendering space extended forward and backward of the display area 235 of the 3D display 230 or 160.

The method for operating the electronic device 101 according to an embodiment may further include identifying 1830 or 1930 whether at least a portion of the object O is disposed in front of the display area 235 in the 3D rendering space.

The method for operating the electronic device 101 according to an embodiment may include, based on identifying that the at least portion of the object O is disposed in front of the display area 235, providing 1870 or 1980 a feedback related to at least one of rotating, reducing, or enlarging the object O.

The method for operating the electronic device 101 according to an embodiment may further include setting 1940 a free display space in the 3D rendering space.

The method for operating the electronic device 101 according to an embodiment may further include, in response to the input, identifying 1960 whether the at least portion of the object O leaves the free display space.

In the method for operating the electronic device 101 according to an embodiment, providing 1980 the feedback may include, based on identifying that the at least portion of the object O leaves the free display space, providing a feedback related to at least one of rotating, reducing, or enlarging the object O.

The method for operating the electronic device 101 according to an embodiment may further include identifying 1860 or 1970 whether a size of the input is within a designated range.

The method for operating the electronic device 101 according to an embodiment may further include, based on identifying that the size of the input exceeds the designated range, applying 1880 or 1990 a designated visual effect to the object O through the 3D display 230 or 160.

The method for operating the electronic device 101 according to an embodiment may further include, based on the input for rotating the object O, identifying 1850 whether at least a portion of the object O leaves the 3D rendering space.

In the method for operating the electronic device 101 according to an embodiment, providing 1870 the feedback may include, based on identifying that the at least portion of the object O leaves the 3D rendering space, rotating the object O in a reverse direction of the input for rotating the object O.

A non-transitory computer-readable storage medium storing at least one program according to an embodiment of the disclosure may include obtaining 1810 or 1910, from the at least one sensor 240 or 176, at least one value related to positions of the eyes L and R of the user U.

The storage medium according to an embodiment may include, based on the at least one value, setting 1820 or 1920 a 3D rendering space including the display area 235 of the 3D display 230 or 160 capable of displaying a 3D screen.

The storage medium according to an embodiment may include obtaining 1840 or 1950 an input related to moving the object O included in the 3D rendering space displayed through the 3D display.

The storage medium according to an embodiment may include, based on the input, displaying, through the 3D display 230 or 160, a preview of the object O moved in the 3D rendering space.

The storage medium according to an embodiment may include, based on a position of the object O corresponding to the input in the 3D rendering space, providing 1870 or 1980 a feedback adjusting displaying of the object O in the 3D rendering space, after the preview is displayed.

The electronic device 101 according to an embodiment of the disclosure may include the 3D display 230 or 160 capable of displaying a 3D screen, the at least one sensor 240 or 176 configured to measure at least one value related to positions of the eyes L and R of the user U, and the at least one processor 210 or 120.

The at least one processor 210 or 120 may be configured to obtain, from the at least one sensor 240 or 176, the at least one value.

The at least one processor 210 or 120 may be configured to, based on the at least one value, set a 3D rendering space including the display area 235 of the 3D display 230 or 160.

The at least one processor 210 or 120 may be configured to obtain an input related to moving the object O included in the 3D rendering space displayed through the 3D display.

The at least one processor 210 or 120 may be configured to, based on the input, display, through the 3D display 230 or 160, a preview of the object O moved in the 3D rendering space.

The at least one processor 210 or 120 may be configured to identify a position of the object O corresponding to the input in the 3D rendering space, after the preview is displayed.

The at least one processor 210 or 120 may be configured to, based on identifying the position of the object O, display the object O on the 3D display 230 or 160 by rotating, enlarging, or reducing the object O.

In the electronic device 101 according to an embodiment, the at least one processor 210 or 120 may be configured to, based on the positions of the eyes L and R of the user U being changed, change the 3D rendering space, as at least part of setting the 3D rendering space.

In the electronic device 101 according to an embodiment, the at least one processor 210 or 120 may be configured to set a free display space in the 3D rendering space.

The at least one processor 210 or 120 may be configured to identify whether at least a portion of the object O leaves the free display space.

The at least one processor 210 or 120 may be configured to, based on identifying that the at least portion of the object O leaves the free display space, display the object O by rotating, reducing, or enlarging the object O.

A method for operating the electronic device 101 according to an embodiment of the disclosure may include obtaining 2020, from the at least one sensor 240 or 176, at least one value related to positions of the eyes L and R of the user U.

The method for operating the electronic device 101 according to an embodiment may include, based on the at least one value, setting 2030 a 3D rendering space including the display area 235 of the 3D display 230 or 160.

The method for operating the electronic device 101 according to an embodiment may include identifying 2050 a relative position of a preview corresponding to an input for the object O with respect to the 3D rendering space.

The method for operating the electronic device 101 according to an embodiment may include displaying 2060 the object O on the 3D display 230 or 160 by rotating, moving, or reducing the object O based on a result of the identification.

A non-transitory computer-readable storage medium storing at least one program according to an embodiment of the disclosure may include obtaining 2020, from the at least one sensor 240 or 176, at least one value related to positions of the eyes L and R of the user U. The storage medium according to an embodiment may include, based on the at least one value, setting 2030 a 3D rendering space including the display area 235 of the 3D display 230 or 160. The storage medium according to an embodiment may include identifying 2050 a relative position of a preview corresponding to an input for the object O with respect to the 3D rendering space. The storage medium according to an embodiment may include displaying 2060 the object O on the 3D display 230 or 160 by rotating, moving, or reducing the object O based on a result of the identification.

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
memory (130; 220) storing instructions;
a three-dimensional (3D) display (230; 160) capable of displaying a 3D screen;
at least one sensor (240; 176) configured to measure at least one value related to positions of eyes (L, R) of a user (U); and
a processor (210; 120), and
wherein the instructions, when executed by the processor, cause the electronic device to:
obtain, from the at least one sensor (240; 176), the at least one value,
based on the at least one value, set a 3D rendering space including a display area (235) of the 3D display (230; 160),
obtain an input related to moving an object (O) included in the 3D rendering space displayed through the 3D display,
based on the input, display, through the 3D display (230; 160), a preview of the object (O) moved in the 3D rendering space, and
after the preview is displayed, based on a position of the object (O) corresponding to the input in the 3D rendering space, provide a feedback adjusting displaying of the object (O) in the 3D rendering space.

2. The electronic device (101) of claim 1, wherein the 3D display (230; 160) includes a lenticular lens (510) or a parallax barrier (520) disposed in front of the display area (235) to induce binocular parallax.

3. The electronic device (101) of claim 1 or 2, wherein the input includes an input for rotating, reducing, or enlarging the object (O) displayed in the 3D rendering space.

4. The electronic device (101) of any one of claims 1 to 3, wherein the instructions, when executed by the processor, cause the electronic device to:
as at least part of the setting the 3D rendering space, set the 3D rendering space extended forward and backward of the display area (235) of the 3D display (230; 160),
identify whether at least a portion of the object (O) is disposed in front of the display area (235) in the 3D rendering space, and
based on identifying that the at least portion of the object (O) is disposed in front of the display area (235), provide a feedback related to at least one of rotating, reducing, or enlarging the object (O).

5. The electronic device (101) of any one of claims 1 to 4, wherein the instructions, when executed by the processor, cause the electronic device to:
set a free display space in the 3D rendering space,
in response to the input, identify whether the at least portion of the object (O) leaves the free display space, and
based on identifying that the at least portion of the object (O) leaves the free display space, provide a feedback related to at least one of rotating, reducing, or enlarging the object (O).

6. The electronic device (101) of any one of claims 1 to 5, wherein the instructions, when executed by the processor, cause the electronic device to:
as at least part of the providing the feedback, based on identifying that the at least portion of the object (O) leaves the free display space, adjust a moving speed of the object (O) according to the input.

7. The electronic device (101) of any one of claims 1 to 6, wherein the instructions cause the electronic device to:
as at least part of the providing the feedback, based on identifying that the at least portion of the object (O) leaves the free display space, move the object O to a designated position corresponding to a direction of the input, or move the object O in a reverse direction of the input.

8. The electronic device (101) of any one of claims 1 to 7, wherein the instructions, when executed by the processor, cause the electronic device to:
identify a property of the object (O), and
as at least part of the providing the feedback, based on the property of the object (O), snap the object (O) to the designated position corresponding to the direction of the input, or bounce the object (O) in the reverse direction of the input.

9. The electronic device (101) of any one of claims 1 to 8, wherein the instructions, when executed by the processor, cause the electronic device to:
as at least part of the identifying whether the at least portion of the object (O) leaves the free display space, based on the input for enlarging the object (O), identify whether the at least portion of the object (O) leaves the free display space, and
as at least part of the providing the feedback, based on identifying that the at least portion of the object (O) leaves the free display space, reduce the object (O) such that the object (O) is located within the free display space.

10. The electronic device (101) of any one of claims 1 to 9, wherein the instructions, when executed by the processor, cause the electronic device to:
based on the input for rotating the object (O), identify whether at least a portion of the object (O) leaves the 3D rendering space, and
as at least part of the providing the feedback, based on identifying that the at least portion of the object (O) leaves the 3D rendering space, rotate the object (O) in a reverse direction of the input for rotating the object (O).

11. The electronic device (101) of any one of claims 1 to 10, wherein the instructions, when executed by the processor, cause the electronic device to:
as at least part of the providing the feedback, move an axis of rotation of the object (O) toward the at least portion of the object (O) leaving the 3D rendering space.

12. The electronic device (101) of any one of claims 1 to 11, wherein the instructions, when executed by the processor, cause the electronic device to:
identify whether a size of the input is within a designated range, and
based on identifying that the size of the input exceeds the designated range, apply, through the 3D display (230; 160), a designated visual effect to the object (O).

13. The electronic device (101) of any one of claims 1 to 12, wherein the instructions, when executed by the processor, cause the electronic device to:
as at least part of the applying the designated visual effect to the object (O), apply a depth of field effect to at least a portion of an edge of the object (O), or limit a movement of the object (O) in a depth direction of the 3D display (230; 160).

14. A method for operating an electronic device (101), comprising:
obtaining (1810; 1910), from at least one sensor (240; 176) included in the electronic device (101), at least one value related to positions of eyes (L, R) of a user (U);
based on the at least one value, setting (1820; 1920) a three-dimensional (3D) rendering space including a display area (235) of a 3D display (230; 160) included in the electronic device (101);
obtaining (1840; 1940) an input related to moving an object (O) included in the 3D rendering space displayed through the 3D display;
based on the input, displaying, through the 3D display (230; 160), a preview of the object (O) moved in the 3D rendering space; and
after the preview is displayed, based on a position of the object (O) corresponding to the input in the 3D rendering space, providing (1870; 1980) a feedback adjusting displaying of the object (O) in the 3D rendering space.

15. An electronic device (101) comprising:
memory (130; 220) storing instructions;
a three-dimensional (3D) display (230; 160) capable of displaying a 3D screen;
at least one sensor (240; 176) configured to measure at least one value related to positions of eyes (L, R) of a user (U); and
a processor (210; 120), and
wherein the instructions, when executed by the processor, cause the electronic device to:
obtain, from the at least one sensor (240; 176), the at least one value,
based on the at least one value, set a 3D rendering space including a display area (235) of the 3D display (230; 160),
obtain an input related to moving an object (O) included in the 3D rendering space displayed through the 3D display,
based on the input, display, through the 3D display (230; 160), a preview of the object (O) moved in the 3D rendering space,
after the preview is displayed, identify a position of the object (O) corresponding to the input in the 3D rendering space, and
based on identifying the position of the object (O), display the object (O) on the 3D display (230; 160) by rotating, enlarging, or reducing the object (O).
